# EUROPÄISCHE PATENTSCHRIFT

(11) **EP 3 068 642 B1**
(45) Veröffentlichungstag und Bekanntmachung des Hinweises auf die Patenterteilung: **10.01.2018**
(21) Anmeldenummer: 14796707.9
(22) Anmeldetag: 07.11.2014
(51) Int. Cl.: B60G 17/018, B60G 17/0165

(54) **VERFAHREN ZUM BEREITSTELLEN EINER STELLGRÖSSE**
METHOD FOR PROVIDING A CONTROL VARIABLE
PROCÉDÉ D'ACQUISITION D'UNE VALEUR DE RÉGLAGE

(30) Priorität: 13.11.2013 DE 102013018927
(43) Veröffentlichungstag der Anmeldung: 21.09.2016
(73) Patentinhaber: Audi AG, 85045 Ingolstadt (DE)
(72) Erfinder: GÖHRLE, Christoph, 85049 Ingolstadt (DE); SCHINDLER, Andreas, 85055 Ingolstadt (DE); UNGER, Andreas, 85080 Gaimersheim (DE); SAWODNY, Oliver, 70186 Stuttgart (DE)
(74) Vertreter: Reichert, Thomas Klaus
(86) Internationale Anmeldenummer: PCT/EP2014/002981
(87) Internationale Veröffentlichungsnummer: WO 2015/070961

(56) Entgegenhaltungen:
- US-A1- 2005 178 628
- US-A1- 2009 062 984
- US-A1- 2010 049 394
- M D Donahue ET AL: "Implementation of an Active Suspension, Preview Controller for Improved Ride Comfort", "Nonlinear and Hybrid Systems in Automotive Control" by Johansson, Rolf & Rantzer, Anders, 1. Januar 2003 (2003-01-01), Seiten 1-22, XP055161957, ISBN: 978-1-85-233652-3 Gefunden im Internet: URL:http://www.springer.com/cda/content/do cument/cda_downloaddocument/9781852336523- c1.pdf?SGWID=0-0-45-81492-p2274264 [gefunden am 2015-01-14]

## Beschreibung

Die Erfindung betrifft ein Verfahren und ein System zum Bereitstellen einer Stellgröße für einen Aktor eines Fahrwerks eines Kraftfahrzeugs.

Ein Kraftfahrzeug umfasst unterschiedliche Sensoren zum Erfassen von Betriebsparametern des Kraftfahrzeugs sowie unterschiedliche Aktoren zum Beaufschlagen von Komponenten des Kraftfahrzeugs. Eine Stellgröße zum Beaufschlagen einer Komponente durch einen Aktor ist dabei aus mindestens einem Wert eines Sensors abzuleiten.

Aus der Druckschrift DE 10 2006 039 353 A1 ist ein Verfahren zur Beeinflussung einer Radfedereinrichtung bekannt, deren Federcharakteristik durch Ansteuerung einer Stelleinrichtung veränderbar ist. Hierbei werden eine Sensoreinrichtung zur Ermittlung eines Höhenprofils einer vorausliegenden Straße und eine Kontrolleinrichtung verwendet, die die Federeinrichtung vorausschauend an den Verlauf des sensorisch erfassten Höhenprofils anpasst.

Die Druckschrift US 2010/049394 A1, die als nächstliegender Stand der Technik betrachtet wird, beschreibt eine Vorrichtung und ein Verfahren zur Beeinflussung einer Federkraftcharakteristik eines aktiven Fahrwerks eines Kraftfahrzeugs. Hierbei wird eine Vorhersagegröße ermittelt, die ein Höhenprofil einer in Fahrtrichtung des Kraftfahrzeugs vorausliegenden Fahrstrecke wiedergibt. Außerdem wird die Federkraftcharakteristik einer Radfedereinrichtung des aktiven Fahrwerks in Abhängigkeit der ermittelten Vorhersagegröße vorausschauend an den Verlauf des erfassten Höhenprofils der in Fahrtrichtung des Kraftfahrzeugs vorausliegenden Fahrstrecke angepasst. Außerdem werden Sensordaten zu einer Beschaffenheit der vorausliegenden Fahrstrecke erfasst und hinsichtlich der Frequenz gefiltert.

Vor diesem Hintergrund werden ein Verfahren und ein System mit den Merkmalen der unabhängigen Patentansprüche vorgestellt. Weitere Ausgestaltungen der Erfindung gehen aus den abhängigen Patentansprüchen und der Beschreibung hervor.

Die Erfindung betrifft ein Verfahren zum Bereitstellen einer Stellgröße für einen Aktor eines aktiven Fahrwerks eines Kraftfahrzeugs. Falls ein Wert für eine Vorausschau-Größe, die von einem Höhenprofil eines von dem Kraftfahrzeug zu befahrenden Untergrunds abhängig ist, zur Verfügung steht, wird die bereitzustellende Stellgröße aus einer Kombination einer Skyhook-Größe, die von einer Bewegung eines Aufbaus des Kraftfahrzeugs abhängig ist, und der Vorausschau-Größe gebildet. Falls für die Vorausschau-Größe kein Wert zur Verfügung steht, wird die Stellgröße aus einer Kombination einer Weiche-Feder-Größe, die von einer Radeinfederung des Kraftfahrzeugs abhängig ist, und der Skyhook-Größe gebildet.

Die vorgesehenen Größen, d. h. die Vorausschau-Größe, die Skyhook-Größe und die Weiche-Feder-Größe sind Stellgrößen für den Aktor, die dem Aktor über Stellsignale bereitgestellt werden, wodurch z. B. dessen Sollkraft, Sollmoment oder Sollposition einzustellen ist, wobei, die Stellgrößen durch eine unterlagerte Aktorregelung eingeregelt werden. Je nach Aktortyp und Softwareschnittstelle können sich die Stellgrößen zur Ansteuerung unterscheiden. Bei allen Aktortypen resultiert daraus eine Kraft, die zwischen dem Aufbau und jeweils einem Rad des Kraftfahrzeugs wirksam ist und somit das Bewegungsverhalten des Fahrzeugs in vertikaler Richtung beeinflusst. Die Vorausschau-Größe ist eine Stellgröße, die auf Basis von Unebenheiten des Untergrunds berechnet wird. Die Skyhook-Größe ist eine Stellgröße, die aus einer Bewegung des Aufbaus, in der Regel aus der absoluten, vertikalen Geschwindigkeit sowie der Nick- und Wankrate des Aufbaus, berechnet wird. Die Weiche-Feder-Größe ist eine Stellgröße, die aus der relativen Bewegung zwischen Aufbau und Rad, also einer Einfederung, berechnet wird.

Im Rahmen des Verfahrens wird mit mindestens einem Sensor zum Erfassen eines Umfelds des Kraftfahrzeugs das Höhenprofil des zu befahrenden Untergrunds ermittelt. Die Vorausschau-Größe wird aus dem ermittelten Höhenprofil des Untergrunds abgeleitet, Auf Grundlage von Werten des Höhenprofils wird die für den Aktor vorgesehene Stellgröße ermittelt, wobei der Aktor auf eine Beschaffenheit des Untergrunds, der u. a. Unebenheiten aufweisen kann, reagiert, so dass ein von dem Aktor des Fahrwerks direkt oder indirekt beaufschlagtes Rad des Kraftfahrzeugs auf eine Unebenheit reagieren und ausweichen kann.

Außerdem wird mindestens ein Sensor zum Erfassen einer kinematischen Größe mindestens einer Komponente des Kraftfahrzeugs verwendet, wobei mit diesem Sensor eine Bewegung der mindestens einen Komponente ermittelt wird. Mit diesem mindestens einen Sensor zum Erfassen der kinematischen Größe wird eine Bewegung des Aufbaus als mindestens eine Komponente des Kraftfahrzeugs bestimmt. Die Skyhook-Größe wird aus der Bewegung des Aufbaus abgeleitet.

Alternativ oder ergänzend wird mit dem mindestens einen Sensor zum Erfassen einer kinematischen Größe eine Bewegung einer einem Rad des Kraftfahrzeugs zugeordneten Federung bzw. Feder als mindestens eine Komponente des Kraftfahrzeugs ermittelt. Die Weiche-Feder-Größe wird aus der Bewegung einer Radeinfederung des Rads bzw. der Federung für das Rad und/oder aus einer relativen Bewegung zwischen Aufbau und Rad abgeleitet.

Das erfindungsgemäße System ist zum Bereitstellen einer Stellgröße für einen Aktor eines aktiven Fahrwerks eines Kraftfahrzeugs ausgebildet und umfasst eine Kontrolleinheit zum Bestimmen der Stellgröße, ein Modul zur Umsetzung einer Vorausschau-Funktion, ein Modul zur Umsetzung einer Skyhook-Funktion und ein Modul zur Umsetzung einer Weiche-Feder-Funktion. Dabei ist das Modul zur Umsetzung der Vorausschau-Funktion dazu ausgebildet, eine Vorausschau-Größe, die von einem Höhenprofil eines von dem Kraftfahrzeug zu befahrenden Untergrunds abhängig ist, zur Verfügung zu stellen. Das Modul zur Umsetzung der Skyhook-Funktion ist dazu ausgebildet, eine Skyhook-Größe, die von einer Bewegung eines Aufbaus des Kraftfahrzeugs abhängig ist, bereitzustellen. Das Modul zur Umsetzung der Weiche-Feder-Funktion ist dazu ausgebildet, eine Weiche-Feder-Größe, die von einer Radeinfederung des Kraftfahrzeugs abhängig ist, bereitzustellen. Die Kontrolleinheit ist dazu ausgebildet, die Stellgröße für den Fall, dass ein Wert für eine Vorausschau-Größe zur Verfügung steht, aus einer Kombination der Skyhook-Größe und der Vorausschau-Größe zu bilden. Alternativ ist die Kontrolleinheit dazu ausgebildet, die Stellgröße aus einer Kombination der Weiche-Feder-Größe und der Skyhook-Größe zu bilden, wenn für die Vorausschau-Größe kein Wert zur Verfügung steht.

Außerdem umfasst das System mindestens einen Sensor zum Erfassen eines Umfelds des Kraftfahrzeugs, der dazu ausgebildet ist, das Höhenprofil des zu befahrenden Untergrunds zu ermitteln und an das Modul zur Umsetzung der Vorausschau-Funktion weiterzuleiten. Das Modul zur Umsetzung der Vorausschau-Funktion ist dazu ausgebildet, die Vorausschau-Größe aus dem Höhenprofil abzuleiten.

Weiterhin umfasst das System mindestens einen Sensor, der dazu ausgebildet ist, einen Wert für mindestens eine kinematische Größe einer Komponente des Kraftfahrzeugs zu erfassen und an das Modul zur Umsetzung der Skyhook-Funktion sowie an das Modul zur Umsetzung der Weiche-Feder-Funktion weiterzuleiten. Das Modul zur Umsetzung der Skyhook-Funktion ist dazu ausgebildet, die Skyhook-Größe aus dem Wert für die mindestens eine kinematische Größe abzuleiten. Das Modul zur Umsetzung der Weiche-Feder-Funktion ist dazu ausgebildet, die Weiche-Feder-Größe aus dem Wert für die mindestens eine kinematische Größe abzuleiten.

Das Modul zur Umsetzung der Vorausschau-Funktion ist dazu ausgebildet, das Modul zur Umsetzung der Weiche-Feder-Funktion zu deaktivieren, wenn der Wert für die Vorausschau-Größe zur Verfügung steht.

Zur Regelung einer elektronisch aktiven dynamischen Höhenverstellung für ein aktives und/oder aktiv verstellbares Fahrwerk eines Kraftfahrzeugs sind bei einer Ausführung des Verfahrens zwei Funktionen bzw. Maßnahmen einzeln oder in Kombination umsetzbar.

Einer ersten, als "Weiche-Feder" bezeichneten Funktion zufolge reagieren Aktoren des Fahrwerks auf Federwege von Federn des Fahrwerks, wobei eine derartige Feder zwischen dem Aufbau und einem Rad des Kraftfahrzeugs angeordnet ist und das Rad mit dem Aufbau mechanisch verbindet. Hierbei werden Unebenheiten des befahrenen Untergrunds bzw. einer befahrenen Straße aktiv ausgeglichen, was mit einer Verringerung einer Federrate der Federn vergleichbar ist. Mit der Weiche-Feder-Funktion wird die von der Bewegung der Radeinfederung abhängige Weiche-Feder-Größe ermittelt.

Eine zweite Funktion wird als "Skyhook" bezeichnet. Diese Skyhook-Funktion basiert auf einer gezielten Dämpfung des Aufbaus eines Kraftfahrzeugs. Das Kraftfahrzeug umfasst als Komponenten den Aufbau, das Fahrwerk und die Räder, wobei das Fahrwerk den Aufbau und die Räder verbindet. Federn, Dämpfer und Aktoren sind Bestandteile des Fahrwerks. Zur Umsetzung der Skyhook-Funktion wird eine Beschleunigung des Aufbaus ermittelt, über die Zeit integriert und gefiltert. Dabei wird z. B. eine Geschwindigkeit des Aufbaus berechnet und durch Beaufschlagung der Aktoren mit der Skyhook-Funktion eine zu der Geschwindigkeit des Aufbaus proportionale Kraft bereitgestellt. Eine aus dieser zweiten Funktion resultierende Wirkung ist mit einem virtuellen Dämpfer vergleichbar, der mit dem Aufbau des Kraftfahrzeugs und einem inertialen Referenzsystem, z. B. dem Himmel, verbunden ist, weshalb die Funktion auch als "Skyhook" bzw. "Himmelshaken" bezeichnet wird, da der Aufbau des Kraftfahrzeugs gewissermaßen über einen Dämpfer mit dem Himmel verbunden ist, wodurch das Kraftfahrzeug bei einer Fahrt über die Straße zu schweben scheint. Mit der Skyhook-Funktion wird die bspw. von einer Bewegung und/oder Regelung des Aufbaus abhängige Skyhook-Größe abgeleitet.

Durch Kombination dieser beiden Funktionen kann sowohl ein weiches Anfedern als auch ein "Über-die-Straße-Schweben" erzielt werden.

Bei einer Umsetzung des Verfahrens werden für den Fall, dass zur Regelung der elektronisch aktiven dynamischen Höhenverstellung für das Fahrwerk des Kraftfahrzeugs keine Signale für die vom Höhenprofil des Untergrunds abhängige Vorschau-Größe (Preview-Größe) zur Verfügung stehen, die Funktionen "Weiche- Feder" und "Skyhook" in Kombination betrieben. In diesem Fall ergibt sich eine Stellgröße u für einen Aktor bspw. durch Addition der beiden funktionsspezifischen Größen u_{weiche Feder} Und u_{Skyhook} mit u = u_{weiche Feder} + u_{Skyhook}.

Falls jedoch ein Wert für die Vorausschau-Größe zur Verfügung steht, wird für die Weiche-Feder-Größe u_{weiche Feder} in Ausgestaltung ein bisher verwendeter, konstanter Wert eingestellt und die Weiche-Feder-Größe u_{weiche Feder} somit eingefroren, wobei der konstante Wert 0 sein kann. Es ist auch möglich, für die Weiche-Feder-Größe zunächst einen konstanten Wert ungleich 0 vorzusehen, der dann langsam und schrittweise dem Wert 0 angenähert und somit "gerampt" wird. Außerdem wird als Stellgröße u zur Ansteuerung der Aktoren des Fahrwerks eine Summe der Skyhook-Größe u_{Skyhook} und der Vorausschau-Größe u_{Vorausschau}, die von mindestens einem sensorisch erfassten Wert einer Größe zum Beschreiben eines von dem Kraftfahrzeug zu befahrenden Untergrunds abhängig ist, verwendet. Hierbei gilt für die Stellgröße: u = u_{Vorausschau} + u_{Skyhook} + u_{weiche Feder}, wobei für die Weiche-Feder-Größe ein konstanter Wert verwendet wird.

Sofern zusätzlich ein Wert für die Vorausschau-Größe u_{Vorausschau} aus der Vorausschau zur Verfügung steht, wird diese nicht einfach zu der Weiche-Feder-Größe u_{weiche Feder} addiert, da die Aktoren die Räder derart beaufschlagen, dass sie Unebenheiten der Straße, die anhand des Höhenprofils vorab erkannt werden können, proaktiv ausweichen können, wodurch Federwege beeinflusst werden. Die Weiche-Feder-Funktion ergibt, dass z. B. durch Kontrolle eines Federwegs auf einem zu befahrenden Untergrund reagiert und eine Federung des Fahrwerks zusätzlich verstärkt wird, obwohl die Federung wegen der Vorausschau und nicht aufgrund von Unebenheiten eingestellt wird. Bei Durchführung des Verfahrens kann u. a. durch eine alternative Verwendung der Vorausschau-Größe und der Weiche-Feder-Größe eine unplausible Regelung des Fahrwerks vermieden werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine Ausführungsform eines erfindungsgemäßen Systems bei Durchführung einer ersten Ausführungsform eines erfindungsgemäßen Verfahrens.
Figur 2 zeigt Diagramme zu einer zweiten Ausführungsform des erfindungsgemäßen Verfahrens.
Figur 3 zeigt in schematischer Darstellung ein Fahrwerk eines Kraftfahrzeugs unter Berücksichtigung unterschiedlicher Maßnahmen bei einer dritten Ausführungsform des erfindungsgemäßen Verfahrens.

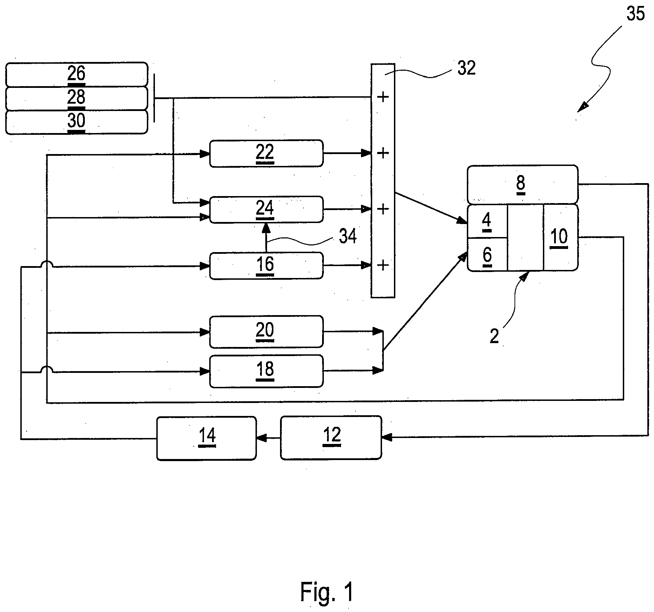

Das Diagramm aus Figur 1 zeigt in schematischer Darstellung ein Fahrzeug 2 mit einem Fahrwerk, wobei diesem Fahrwerk des Kraftfahrzeugs 2 mindestens ein Aktor 4 sowie mindestens ein Dämpfer 6 zugeordnet ist. Außerdem ist dem Kraftfahrzeug 2 mindestens ein erster Sensor 8 zugeordnet, der zum Erfassen eines Umfelds bzw. einer Umgebung des Kraftfahrzeugs 2 auf Basis von elektromagnetischen Wellen und demnach laserbasiert, radarbasiert und/oder videobasiert, ausgebildet ist. Ferner ist dem Kraftfahrzeug 2 mindestens ein zweiter Sensor 10 zugeordnet, der dazu ausgebildet ist, mindestens eine kinematische Größe einer Komponente des Kraftfahrzeugs 2, bspw. deren Position, deren Geschwindigkeit, deren Beschleunigung, deren Wankrate, deren Nickrate und/oder deren Hubbeschleunigung zu erfassen. Diese Sensoren 8, 10, die nachfolgend vorgestellten Module 12, 14, 16, 18, 20, 22, 24, 26, 28, 30 sowie eine Kontrolleinheit 32 sind hier als Komponenten des erfindungsgemäßen Systems 35 ausgebildet.

Bei Durchführung der ersten Ausführungsform des Verfahrens durch das System 35 werden von dem mindestens einen ersten Sensor 8 zum Erfassen des Umfelds des Kraftfahrzeugs 2 Werte und somit Rohdaten für ein Höhenprofil eines Untergrunds, in der Regel einer Straße, die von dem Kraftfahrzeug 2 zu befahren ist, bereitgestellt. Diese bereitgestellten Werte werden von einem Modul 12 zum Durchführen einer Akkumulation akkumuliert und somit zusammengefasst. Die nunmehr akkumulierten Werte werden von einem Modul 14 zur Verarbeitung gefiltert. Außerdem wird von dem Modul 14 für die akkumulierten und gefilterten Werte zum Beschreiben des Höhenprofils des Untergrunds u. a. eine Unebenheitserkennung durchgeführt. Hierbei wird ein Verlauf des Höhenprofils auf das Vorliegen von Unebenheiten hin untersucht. Dabei umfasst das Höhenprofil an einer Stelle eine Unebenheit, wenn ein Wert für eine Höhe dieser Stelle einen Grenzwert überschreitet und/oder wenn an dieser Stelle ein Wert einer örtlichen Ableitung und somit eines Gradienten des Höhenprofils einen Grenzwert überschreitet.

Die akkumulierten und verarbeiteten Werte für das Höhenprofil werden weiterhin einem Modul 16 zur Realisierung einer Vorausschau-Funktion sowie einem Modul 18 zum Einstellen eines Dämpfers 6 bei Vorliegen einer Unebenheit bereitgestellt, wobei der mindestens eine Dämpfer 6 weich eingestellt wird. Von dem mindestens einen zweiten Sensor 10 zum Bestimmen der mindestens einen kinematischen Größe des Kraftfahrzeugs 2 werden Werte für eine Hubbeschleunigung bzw. vertikale Beschleunigung d²zₐ/dt² als kinematische Größe mindestens einer Komponente des Kraftfahrzeugs 2, einer Neigungsänderung bzw. Nickrate dn/dt als kinematische Größe mindestens einer Komponente des Kraftfahrzeugs 2, einer Wankrate dw/dt als kinematische Größe mindestens einer Komponente des Kraftfahrzeugs sowie für eine vertikal orientierte Radeinfederung I_{z,ij} mindestens einer Komponente, hier einer Federung eines Rads des Kraftfahrzeugs 2, bereitgestellt. Hierbei stehen die Parameter ij für jeweils ein, einer Achse i des Kraftfahrzeugs 2 zugeordnetes Rad j.

Sämtliche dieser genannten kinematischen Größen, die von dem mindestens einen zweiten Sensor 10 erfasst werden, werden einem Modul 20 zum Einstellen mindestens eines Dämpfers 6 sowie zur Realisierung einer sogenannten Groundhook-Funktion bereitgestellt. Einem Modul 22 zur Bereitstellung der Skyhook-Funktion werden dagegen lediglich Werte für die vertikale Beschleunigung, die Nickrate und die Wankrate bereitgestellt. Einem Modul 24 zur Umsetzung einer Weiche-Feder-Funktion wird in der vorliegenden Ausführungsform lediglich ein Wert der Radeinfederung I_{z,ij} von dem zumindest einen Sensor 10 zum Ermitteln der mindestens einen kinematischen Größe bereitgestellt.

Analog zur Skyhook-Funktion wird bei der Groundhook-Funktion statt des Aufbaus (Skyhook) das Rad (Groundhook) des Kraftfahrzeugs über einen virtuellen Dämpfer mit einem inertialen Referenzsystem verbunden. Hier wird eine Kraft berechnet, die proportional zu einer üblicherweise in vertikaler Richtung orientierten Geschwindigkeit des Rads ist. Die für den mindestens einen Aktor bereitzustellende Stellgröße wird unter Berücksichtigung dieser Kraft vorgegeben. Somit werden Schwingungen des Rads gedämpft, was zu einer Verbesserung des Straßenkontakts führt.

Außerdem zeigt Figur 1 ein Modul 26 zur Realisierung einer Nickvorsteuerung, ein Modul 28 zur Realisierung einer Wankvorsteuerung sowie ein Modul 30 zur Kontrolle eines Niveaus des Kraftfahrzeugs 2. Von diesen drei letztgenannten Modulen 26, 28, 30 werden Werte für mindestens eine Führungsgröße bereitgestellt, wobei derartige Werte dem Modul 24 zur Realisierung der Weiche-Feder-Funktion und weiterhin einer Kontrolleinheit 32 übermittelt werden.

Dieser Kontrolleinheit 32 werden zudem Werte von dem Modul 24 für die Weiche-Feder-Funktion und dem Modul 16 für die Vorausschau-Funktion bereitgestellt. Sämtliche der Kontrolleinheit 32 bereitgestellten Werte werden zur Bestimmung mindestens einer Stellgröße zum Beaufschlagen des mindestens einen Aktors 4 verwendet. Dagegen werden Werte, die von den Modulen 18, 20 bereitgestellt werden, zum Bereitstellen mindestens einer Stellgröße zum Beaufschlagen des mindestens einen Dämpfers 6 des Kraftfahrzeugs 2 verwendet.

Bei der durch das System 35 durchzuführenden Ausführungsform des erfindungsgemäßen Verfahrens ist in einer Variante vorgesehen, dass keine Werte für das Höhenprofil unter den Rädern des Kraftfahrzeugs 2 bereitgestellt werden. In diesem Fall erhält das Modul 16 zur Umsetzung der Vorausschau-Funktion keine als Ausgangswerte vorgesehenen Werte. Dabei werden von der Kontrolleinheit 32 lediglich Werte verwendet, die von den Modulen 22, 24, 26, 28, 30 bereitgestellt werden. Falls jedoch Werte für das Höhenprofil vorliegen, ist vorgesehen, dass das Modul 24 zur Realisierung der Weiche-Feder-Funktion von dem Modul 16 zur Realisierung der Vorausschau-Funktion deaktiviert wird, wie durch einen Pfeil 34 angedeutet. In diesem Fall werden von der Kontrolleinheit 32 Werte der Module 16, 22, 26, 28, 30 verwendet.

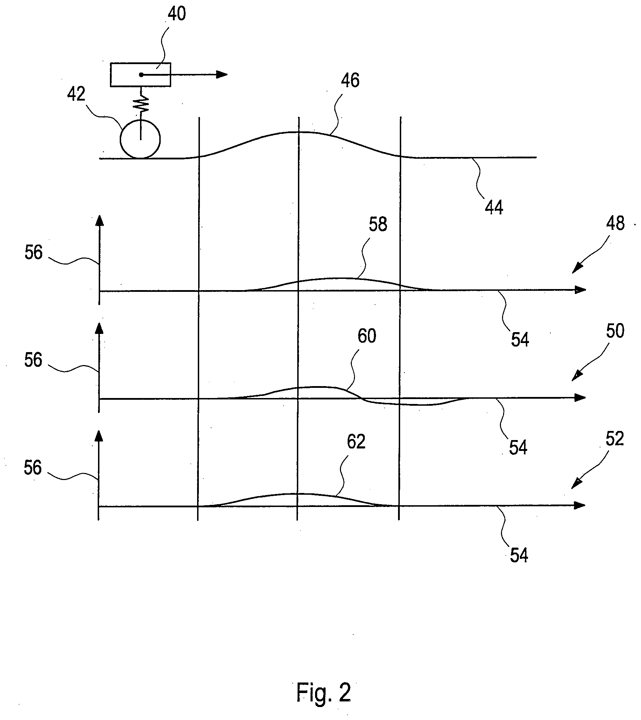

Figur 2 zeigt in schematischer Darstellung einen Aufbau 40 eines Kraftfahrzeugs und eines Rads 42 dieses Kraftfahrzeugs bei einer Fahrt über einen Untergrund 44, der hier eine Unebenheit 46 aufweist. Außerdem umfasst Figur 2 drei untereinander angeordnete Diagramme 48, 50, 52, die jeweils eine Abszisse 54 aufweisen, entlang der die Zeit aufgetragen ist. Außerdem umfasst jedes der Diagramme 48, 50, 52, eine Ordinate 56, entlang der Werte für eine Größe aufgetragen sind. In einem ersten Diagramm 48 ist ein Verlauf 58 einer Weiche-Feder-Größe während der Fahrt des Kraftfahrzeugs dargestellt. In einem zweiten Diagramm 50 ist ein Verlauf 60 für eine Skyhook-Größe während der Fahrt des Kraftfahrzeugs dargestellt. In einem dritten Diagramm 56 ist ein Verlauf 62 einer Vorausschau-Größe dargestellt.

Anhand der Diagramme ist zu erkennen, dass die Weiche-Feder-Größe (Verlauf 58) sowie die Skyhook-Größe (Verlauf 60) erst wirksam werden, nachdem der Anfang der Unebenheit 46 bereits überfahren wurde. Der Verlauf 62 der Vorausschau-Größe entspricht hier dem Verlauf 58 der Weiche-Feder-Größe, wirkt aber bereits gleich zu Beginn der Unebenheit 46. Während mindestens ein Aktor des Kraftfahrzeugs bei einer Kombination der Weiche-Feder-Größe und der Skyhook-Größe lediglich reagiert, wird durch die Kombination der Vorausschau-Größe und der Skyhook-Größe eine proaktive Ansteuerung des mindestens einen Aktors realisiert. Da die Verläufe 58, 62 der Weiche-Feder-Größe und der Vorausschau-Größe prinzipiell ähnlich sind, ist eine Substitution der Weiche-Feder-Größe durch die Vorausschau-Größe zulässig. Die Skyhook-Größe ist dagegen von den beiden anderen Größen unabhängig.

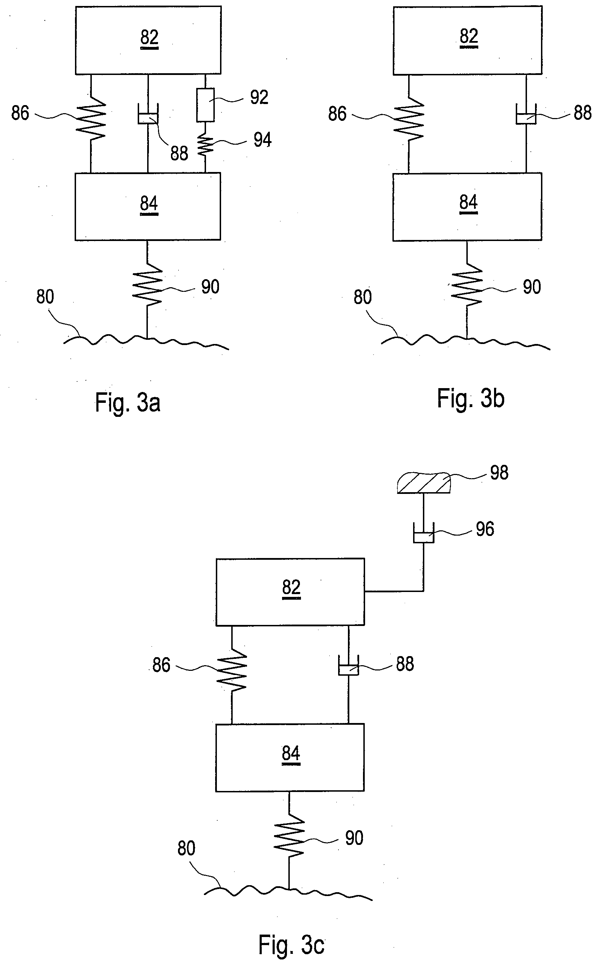

In den Figuren 3a, 3b und 3c sind unterschiedliche Modelle für Maßnahmen bzw. Funktionen zur Kontrolle, üblicherweise zur Regelung, von Aktoren eines Kraftfahrzeugs dargestellt, das sich auf einem Untergrund 80 bewegt. Dabei ist für jede dieser Maßnahmen eine Masse 82 für einen Aufbau des Kraftfahrzeugs, eine Masse 84 für ein Rad des Kraftfahrzeugs sowie eine Feder 86 des Aufbaus und ein Dämpfer 88 des Aufbaus, die zwischen den beiden Massen 82, 84 angeordnet sind, schematisch dargestellt. Ferner zeigen die Figuren 3a, 3b und 3c für die drei Maßnahmen jeweils eine zwischen dem Rad mit der Masse 84 und dem Untergrund 80 angeordnete Reifenfeder 90.

Zur Umsetzung einer Funktion für ein reales System zeigt Figur 3a zusätzlich einen Aktor 92 sowie eine Drehstabfeder 94, die in Reihe zwischen den beiden Massen 82, 84 und parallel zu der Feder 86 des Aufbaus und dem Dämpfer 88 des Aufbaus angeordnet sind. Anhand einer von Figur 3b vorgestellten Weiche-Feder-Funktion ist vorgesehen, dass eine Federkonstante der Feder 86 des Aufbaus, die hier lediglich parallel zu dem Dämpfer 88 des Aufbaus angeordnet ist, wesentlich geringer als bei der Feder 86 des Aufbaus zur Umsetzung der Funktion für das reale System (Figur 3a) ausgebildet ist, so dass die Feder 86 des Aufbaus im Vergleich zu der Funktion für das reale System wesentlich weicher eingestellt ist. Bei einer anhand von Figur 3c vorgestellten Umsetzung einer Skyhook-Funktion ist vorgesehen, dass die Feder 86 des Aufbaus ähnlich hart wie im Fall des realen Systems, in der vorliegenden Ausführungsform härter als im Fall zur Realisierung der Weiche-Feder-Funktion eingestellt ist. Figur 3c zeigt ferner, dass der Aufbau des Kraftfahrzeugs mit der Masse 82 über einen virtuellen Dämpfer 96 mit einem inertialen Referenzsystem 98 verbunden ist.

Die in den Figuren 3b und 3c dargestellten Modelle sind idealisiert und können durch das real existierende Modell aus Figur 3a realisiert werden. Dazu wird der Aktor 92 derart angesteuert, dass sich im Fahrwerk zwischen dem Aufbau mit der Masse 82 und dem Rad mit der Masse 84 dieselben Kräfte einstellen, wie sie sich in den Modellen ergeben würden. Die Kombination der Weiche-Feder-Funktion (Figur 3b) und der Skyhook-Funktion (Figur 3c) wird hier durch ein Modell symbolisiert, das wie in Figur 3c strukturiert ist, jedoch die weichere Federsteifigkeit der Feder des Modells aus Figur 3b aufweist. Wird statt der Weiche-Feder-Funktion die Vorausschau-Funktion genutzt, wird im alternativen Modell wieder die härtere Federsteifigkeit der Modelle aus den Figuren 3a und 3c wirksam, jedoch statt dessen eine Komponente addiert, die sich direkt aus dem Profil des Untergrunds 80 ergibt.

## Patentansprüche

1. Verfahren zum Bereitstellen einer Stellgröße für einen Aktor (4) eines aktiven Fahrwerks eines Kraftfahrzeugs (2), bei dem die Stellgröße für den Fall, dass ein Wert für eine Vorausschau-Größe, die von einem Höhenprofil eines von dem Kraftfahrzeug (2) zu befahrenden Untergrunds abhängig ist, zur Verfügung steht, aus einer Kombination einer Skyhook-Größe, die von einer Bewegung eines Aufbaus des Kraftfahrzeugs (2) abhängig ist, und der Vorausschau-Größe gebildet wird, und wobei die Stellgröße aus einer Kombination einer Weiche-Feder-Größe, die von einer Radeinfederung des Kraftfahrzeugs (2) abhängig ist, und der Skyhook-Größe gebildet wird, wenn für die Vorausschau-Größe kein Wert zur Verfügung steht, **dadurch gekennzeichnet, dass** für den Fall, dass ein Wert für die Vorausschau-Größe zur Verfügung steht, für die Weiche-Feder-Größe ein konstanter Wert verwendet wird, wobei die Stellgröße aus einer Kombination der konstanten Weiche-Feder-Größe, der Skyhook-Größe und der Vorausschau-Größe gebildet wird.

2. Verfahren nach Anspruch 1, bei dem mit mindestens einem Sensor (8) zum Erfassen eines Umfelds des Kraftfahrzeugs (2) das Höhenprofil des zu befahrenden Untergrunds ermittelt wird, und bei dem die Vorausschau-Größe aus dem Höhenprofil abgeleitet wird.

3. Verfahren nach Anspruch 1 oder 2, bei dem mit mindestens einem Sensor (10) zum Erfassen einer kinematischen Größe mindestens einer Komponente des Kraftfahrzeugs (2) eine Bewegung der mindestens einen Komponente abgeleitet wird.

4. Verfahren nach Anspruch 3, bei dem mit dem mindestens einen Sensor (10) zum Erfassen einer kinematischen Größe eine Bewegung des Aufbaus als mindestens eine Komponente des Kraftfahrzeugs (2) abgeleitet wird, und bei dem die Skyhook-Größe aus der Bewegung des Aufbaus abgeleitet wird.

5. Verfahren nach Anspruch 3 oder 4, bei dem mit dem mindestens einen Sensor (10) zum Erfassen einer kinematischen Größe eine Bewegung einer einem Rad (42) des Kraftfahrzeugs (2) zugeordneten Federung als mindestens eine Komponente des Kraftfahrzeugs (2) abgeleitet wird, und bei dem die Weiche-Feder-Größe aus einer Radeinfederung des Rads (42) abgeleitet wird.

6. System zum Bereitstellen einer Stellgröße für einen Aktor (4) eines aktiven Fahrwerks eines Kraftfahrzeugs (2), wobei das System (35) eine Kontrolleinheit (32) zum Bestimmen der Stellgröße, ein Modul (16) zur Umsetzung einer Vorausschau-Funktion, ein Modul (22) zur Umsetzung einer Skyhook-Funktion und ein Modul (24) zur Umsetzung einer Weiche-Feder-Funktion aufweist, wobei das Modul (16) zur Umsetzung der Vorausschau-Funktion dazu ausgebildet ist, eine Vorausschau-Größe, die von einem Höhenprofil eines von dem Kraftfahrzeug (2) zu befahrenden Untergrunds abhängig ist, zur Verfügung zu stellen, wobei das Modul (22) zur Umsetzung der Skyhook-Funktion dazu ausgebildet ist, eine Skyhook-Größe, die von einer Bewegung eines Aufbaus des Kraftfahrzeugs (2) abhängig ist, bereitzustellen, wobei das Modul (24) zur Umsetzung der Weiche-Feder-Funktion dazu ausgebildet ist, eine Weiche-Feder-Größe, die von einer Radeinfederung des Kraftfahrzeugs (2) abhängig ist, bereitzustellen, wobei die Kontrolleinheit (32) dazu ausgebildet ist, die Stellgröße für den Fall, dass ein Wert für die Vorausschau-Größe zur Verfügung steht, aus einer Kombination der Skyhook-Größe und der Vorausschau-Größe zu bilden, und wobei die Kontrolleinheit (32) dazu ausgebildet ist, die Stellgröße aus einer Kombination der Weiche-Feder-Größe und der Skyhook-Größe zu bilden, wenn für die Vorausschau-Größe kein Wert zur Verfügung steht, **dadurch gekennzeichnet, dass** für den Fall, dass ein Wert für die Vorausschau-Größe zur Verfügung steht, für die Weiche-Feder-Größe ein konstanter Wert zu verwenden ist, wobei die Stellgröße aus einer Kombination der konstanten Weiche-Feder-Größe, der Skyhook-Größe und der Vorausschau-Größe zu bilden ist.

7. System nach Anspruch 6, das mindestens einen Sensor (8) zum Erfassen eines Umfelds des Kraftfahrzeugs (2) aufweist, der dazu ausgebildet ist, das Höhenprofil des zu befahrenden Untergrunds zu ermitteln und an das Modul (16) zur Umsetzung der Vorausschau-Funktion weiterzuleiten, wobei das Modul (16) zur Umsetzung der Vorausschau-Funktion dazu ausgebildet ist, die Vorausschau-Größe aus dem Höhenprofil abzuleiten.

8. System nach Anspruch 6 oder 7, das mindestens einen Sensor (10) aufweist, der dazu ausgebildet ist, einen Wert für mindestens eine kinematische Größe einer Komponente des Kraftfahrzeugs (2) zu erfassen und an das Modul (22) zur Umsetzung der Skyhook-Funktion und an das Modul (24) zur Umsetzung der Weiche-Feder-Funktion weiterzuleiten, wobei das Modul (22) zur Umsetzung der Skyhook-Funktion dazu ausgebildet ist, die Skyhook-Größe aus dem Wert für die mindestens eine kinematische Größe abzuleiten, und wobei das Modul (24) zur Umsetzung der Weiche-Feder-Funktion dazu ausgebildet ist, die Weiche-Feder-Größe aus dem Wert für die mindestens eine kinematische Größe abzuleiten.

9. System nach einem der Ansprüche 6 bis 8, bei dem das Modul (16) zur Umsetzung der Vorausschau-Funktion dazu ausgebildet ist, das Modul (24) zur Umsetzung der Weiche-Feder-Funktion zu deaktivieren, wenn der Wert für die Vorausschau-Größe zur Verfügung steht.

## Claims

1. Method for providing a manipulated variable for an actuator (4) of an active chassis of a motor vehicle (2), in which, in the event that a value for a projection variable, which is dependent on an elevation profile of a surface to be driven on by the motor vehicle (2), is made available, the manipulated variable is formed from a combination of a Skyhook variable, which is dependent on a movement of a structure of the motor vehicle (2), and the projection variable, and wherein the manipulated variable is formed from a combination of a soft-spring variable, which is dependent on a wheel spring deflection of the motor vehicle (2), and the Skyhook variable, if no value is made available for the projection variable, **characterised in that**, in the event that a value for the projection variable is made available, a constant value is used for the soft-spring variable, wherein the manipulated variable is formed from a combination of the constant soft-spring variable, the Skyhook variable and the projection variable.

2. Method according to claim 1, in which the elevation profile of the surface to be driven on is determined with at least one sensor (8) for detecting a surrounding environment of the motor vehicle (2), and in which the projection variable is derived from the elevation profile.

3. Method according to claim 1 or 2, in which a movement of the at least one component is derived with at least one sensor (10) for detecting a kinematic variable of at least one component of the motor vehicle (2).

4. Method according to claim 3, in which a movement of the structure is derived as at least one component of the motor vehicle (2) with the at least one sensor (10) for detecting a kinematic variable, and in which the Skyhook variable is derived from the movement of the structure.

5. Method according to claim 3 or 4, in which a movement of a suspension allocated to a wheel (42) of the motor vehicle (2) is derived as at least one component of the motor vehicle (2) with the at least one sensor (10) for detecting a kinematic variable, and in which the soft-spring variable is derived from a wheel spring deflection of the wheel (42).

6. System to provide a manipulated variable for an actuator (4) of an active chassis of a motor vehicle (2), wherein the system (35) has a control unit (32) for determining the manipulated variable, a module (16) for implementing a projection function, a module (22) for implementing a Skyhook function and a module (24) for implementing a soft-spring function, wherein the module (16) for implementing the projection function is formed to make available a projection variable which is dependent on an elevation profile of a surface to be driven on by the vehicle (2), wherein the module (22) for implementing the Skyhook function is formed to provide a Skyhook variable which is dependent on a movement of a structure of the motor vehicle (2), wherein the module (24) for implementing the soft-spring function is formed to provide a soft-spring variable which is dependent on a wheel spring deflection of a motor vehicle (2), wherein the control unit (32) is formed to form the manipulated variable, in the event that a value for the projection variable is made available, from a combination of the Skyhook variable and the projection variable, and wherein the control unit (32) is formed to form the manipulated variable from a combination of the soft-spring variable and the Skyhook variable if no value is made available for the projection variable, **characterised in that**, in the event that a value for the projection variable is made available, a constant value is to be used for the soft-spring variable, wherein the manipulated variable is to be formed from a combination of the constant soft-spring variable, the Skyhook variable and the projection variable.

7. System according to claim 6, which has at least one sensor (8) for detecting a surrounding environment of the motor vehicle (2), which is formed to determine the elevation profile of the surface to be driven on and to transfer it to the module (16) for implementing the projection function, wherein the module (16) for implementing the projection function is formed to derive the projection variable from the elevation profile.

8. System according to claim 6 or 7, which has at least one sensor (10) which is formed to detect a value for at least one kinematic variable of a component of the motor vehicle (2) and to transfer it to the module (22) for implementing the Skyhook function and to the module (24) for implementing the soft-spring function, wherein the module (22) for implementing the Skyhook function is formed to derive the Skyhook variable from the value for the at least one kinematic variable, and wherein the module (24) for implementing the soft-spring function is formed to derive the soft-spring variable from the value for the at least one kinematic variable.

9. System according to any one of claims 6 to 8, in which the module (16) for implementing the projection function is formed to deactivate the module (24) for implementing the soft-spring function if the value for the projection variable is made available.

## Revendications

1. Procédé d'acquisition d'une valeur de réglage pour un actionneur (4) d'un châssis actif d'un véhicule automobile (2), dans lequel la valeur de réglage dans l'hypothèse où une valeur est disponible pour une grandeur de prévision, qui dépend d'un profil de hauteur d'un sol à franchir par le véhicule automobile (2), est formée d'une combinaison d'une grandeur Skyhook, qui dépend d'un mouvement d'une carrosserie du véhicule automobile (2), et de la grandeur de prévision, et dans lequel la valeur de réglage est formée d'une combinaison d'une grandeur de suspension adoucie, qui dépend d'un débattement de roue du véhicule automobile (2), et de la grandeur Skyhook, lorsqu'aucune valeur n'est disponible pour la grandeur de prévision, **caractérisé en ce que** dans l'hypothèse où une valeur est disponible pour la grandeur de prévision, une valeur constante est utilisée pour la grandeur de suspension adoucie, dans lequel la valeur de réglage est formée d'une combinaison de la grandeur de suspension adoucie constante, de la grandeur Skyhook et de la grandeur de prévision.

2. Procédé selon la revendication 1, dans lequel le profil de hauteur du sol à franchir est déterminé avec au moins un capteur (8) de détection d'un environnement du véhicule automobile (2), et dans lequel la grandeur de prévision est déduite du profil de hauteur.

3. Procédé selon la revendication 1 ou 2, dans lequel un mouvement de l'au moins une composante est déduit avec au moins un capteur (10) de détection d'une grandeur cinématique d'au moins une composante du véhicule automobile (2).

4. Procédé selon la revendication 3, dans lequel un mouvement de la carrosserie est déduit en tant qu'au moins une composante du véhicule automobile (2) avec l'au moins un capteur (10) de détection d'une grandeur cinématique, et dans lequel la grandeur Skyhook est déduite du mouvement de la carrosserie.

5. Procédé selon la revendication 3 ou 4, dans lequel un mouvement d'une suspension affectée à une roue (42) du véhicule automobile (2) est déduit en tant qu'au moins une composante du véhicule automobile (2) avec l'au moins un capteur (10) de détection d'une grandeur cinématique, et dans lequel la grandeur de suspension adoucie est déduite d'un débattement de roue de la roue (42).

6. Système d'acquisition d'une valeur de réglage pour un actionneur (4) d'un châssis actif d'un véhicule automobile (2), dans lequel le système (35) présente une unité de commande (32) pour la définition de la valeur de réglage, un module (16) pour la mise en oeuvre d'une fonction de prévision, un module (22) pour la mise en oeuvre d'une fonction Skyhook et un module (24) pour la mise en oeuvre d'une fonction de suspension adoucie, dans lequel le module (16) de mise en oeuvre de la fonction de prévision est réalisé pour mettre à disposition une grandeur de prévision, qui dépend d'un profil de hauteur d'un sol à franchir par le véhicule automobile (2), dans lequel le module (22) de mise en oeuvre de la fonction Skyhook est réalisé pour mettre à disposition une grandeur Skyhook, qui dépend d'un mouvement d'une carrosserie du véhicule automobile (2), dans lequel le module (24) de mise en oeuvre de la fonction de suspension adoucie est réalisé pour mettre à disposition une grandeur de suspension adoucie, qui dépend d'un débattement de roue du véhicule automobile (2), dans lequel l'unité de commande (32) est réalisée pour former la valeur de réglage dans l'hypothèse où une valeur est disponible pour la grandeur de prévision, à partir d'une combinaison de la grandeur Skyhook et de la grandeur de prévision, et dans lequel l'unité de commande (32) est réalisée pour former la valeur de réglage à partir d'une combinaison de la grandeur de suspension adoucie et de la grandeur Skyhook, lorsqu'aucune valeur n'est disponible pour la grandeur de prévision, **caractérisé en ce que** dans l'hypothèse où une valeur est disponible pour la grandeur de prévision, une valeur constante doit être utilisée pour la grandeur de suspension adoucie, dans lequel la valeur de réglage doit être formée à partir d'une combinaison de la grandeur de suspension adoucie constante, de la grandeur Skyhook et de la grandeur de prévision.

7. Système selon la revendication 6, qui présente au moins un capteur (8) de détection d'un environnement du véhicule automobile (2), qui est réalisé pour déterminer le profil de hauteur du sol à franchir et le transmettre au module (16) de mise en oeuvre de la fonction de prévision, dans lequel le module (16) de mise en oeuvre de la fonction de prévision est réalisé pour déduire la grandeur de prévision du profil de hauteur.

8. Système selon la revendication 6 ou 7, qui présente au moins un capteur (10), qui est réalisé pour détecter une valeur pour au moins une grandeur cinématique d'une composante du véhicule automobile (2) et la transmettre au module (22) de mise en oeuvre de la fonction Skyhook et au module (24) de mise en oeuvre de la fonction de suspension adoucie, dans lequel le module (22) de mise en oeuvre de la fonction Skyhook est réalisé pour déduire la grandeur Skyhook à partir de la valeur pour l'au moins une grandeur cinématique, et dans lequel le module (24) de mise en oeuvre de la fonction de suspension adoucie est réalisé pour déduire la grandeur de suspension adoucie à partir de la valeur pour l'au moins une grandeur cinématique.

9. Système selon l'une quelconque des revendications 6 à 8, dans lequel le module (16) de mise en oeuvre de la fonction de prévision est réalisé pour désactiver le module (24) de mise en oeuvre de la fonction de suspension adoucie, lorsque la valeur pour la grandeur de prévision est disponible.
